# EUROPEAN PATENT SPECIFICATION

(11) **EP 4 490 425 B1**
(45) Date of publication and mention of the grant of the patent: **02.07.2025**
(21) Application number: 23794037.4
(22) Date of filing: 23.10.2023
(51) Int. Cl.: F17C 1/08

(54) **CONFORMABLE TANK**
ANPASSBARER TANK
RÉSERVOIR CONFORMABLE

(30) Priority: 27.10.2022 SE 2251242
(43) Date of publication of application: 15.01.2025
(73) Proprietor: Nitiu AB, 801 06 Gävle (SE)
(72) Inventor: STOCKFELT, Michail, 804 30 GÄVLE (SE); HAINSWORTH, Joseph, 802 84 GÄVLE (SE)
(74) Representative: Brann AB
(86) International application number: PCT/EP2023/079407
(87) International publication number: WO 2024/088931

(56) References cited:
- US-A- 3 441 164
- US-A1- 2004 188 446
- US-A1- 2014 224 809
- US-A1- 2015 336 680
- US-B2- 10 731 344

## Description

### TECHNICAL FIELD

The present disclosure relates to conformable tanks for holding substances, in particular pressurized substances.

### BACKGROUND

Containers configured to hold substances, in particular configured to hold substances under a different pressure than the surrounding atmosphere, are often referred to as tanks. The difference in pressure inside the tank and the pressure in the surrounding atmosphere results in forces acting on the walls of the tank.

One example of a substance typically held under a higher pressure than the surrounding atmosphere is Hydrogen. However, the underlying problem applies to any pressurized substance regardless of if it is in a solid, liquid, or gaseous state.

If a high pressure is applied to the substance, compared to the surrounding atmosphere, the tank will in theory assume a near spherical shape.

For practical reasons it is desirable that the tank conforms to a desired exterior geometry. Typically, conform to a void in a mechanical construction, such as a wing of an aircraft or the chassis of a road vehicle, which is readily available for the tank.

To ensure that the tank fits in the available void and continuously conforms to the desired exterior geometry of the void, additional supporting features are needed. The supporting features typically supports the walls of the tank to minimize deformation when subjected to the forces acting on the walls of the tank.

Conventional solutions may comprise an internal reinforcement structure for preventing the walls from collapsing when subjected to the forces acting on the walls of the tank. An example is shown in WO2022/053585. A further example can be found in WO 2013/073724 A1 which describes large boat tanks with internal stringers, bulkheads etc. A further example is described in EP 1 907 750 B1 which discloses tie rods between opposing walls. Yet a further example is shown in US 9 234 626 B2 disclosing a tank with globular cells. Yet a further example is shown in US 9 249 931 B2 disclosing Polyhedral cells. Further examples may be found in EP1723053B1, KR101701765B1 and KR101935919. However, a problem with such conventional solution is that the material of the tank is locally subjected to high material stress when the reinforcement structure typically relies on beams or trusses to transfer forces at selected points on walls of the tank.

Other conventional solutions may comprise an internal structure to prevent a shift in weight due to sloshing of liquids, e.g., as described in EP1137577B1. However, these solutions do not focus on the structural integrity of the tank.

Thus, there is a need for an improved tank to hold a pressurized substance.

### SUMMARY OF THE INVENTION

The above-described drawbacks are overcome by the subject matter described herein. Further advantageous implementation forms of the invention are described herein.

According to a first aspect of the invention the object of the invention is achieved by a tank configured to hold a pressurized substance. The tank comprises a chamber, the chamber is configured to enclose the pressurized substance and provide a seal between the pressurized substance and a surrounding atmosphere, an endoskeleton arranged within the chamber and being coupled to the chamber to provide structural support to the chamber, wherein the endoskeleton comprises a plurality of coupled support members, wherein the plurality of coupled support members comprises at least a first set of support members having sides that are formed by sheets, wherein each support member of the support members in the first set comprises interior asymmetric tetrahedral structures formed by the sides, wherein each side of the asymmetric tetrahedral structures is in the shape of a non-equilateral triangle.

In one embodiment of the first aspect, the chamber is configured with a shape that is conformable to a desired exterior geometry intended to surround the chamber.

In one embodiment of the first aspect, the endoskeleton further comprises a second set of support members, wherein each of the support members in the second set comprises interior polyhedral structures other than the asymmetric tetrahedral structures.

In one embodiment of the first aspect, where each of the plurality of coupled support members has an equal exterior size.

In one embodiment of the first aspect, where at least some of the plurality of coupled support members have varying exterior size.

In one embodiment of the first aspect, the endoskeleton is coupled to the chamber by attaching one or more sheets of the first set of support members to the chamber.

In one embodiment of the first aspect, the one or more sheets of the first set are attached to the chamber along sides of one or more sheets facing the chamber.

In one embodiment of the first aspect, the one or more sheets are attached to the chamber by welding and/or gluing and/or brazing and/or fusing and/or additive manufacturing and/or additive depositioning.

In one embodiment of the first aspect, the tank further comprises a jacket, the jacket being arranged to form a layer enclosing the exterior of the chamber.

In one embodiment of the first aspect, the jacket forms an exoskeleton configured to provide structural support to the chamber.

In one embodiment of the first aspect, the tank further comprises an insulation layer, the insulation layer being arranged to form a layer enclosing the exterior of the chamber.

In one embodiment of the first aspect, where at least the sheets of the first set of support members are provided with openings.

In one embodiment of the first aspect, the sheets of the first set of support members comprises metal.

In one embodiment of the first aspect, the metal is stainless steel.

In one embodiment of the first aspect, the sheets of the first set of support members comprises plastic.

In one embodiment of the first aspect, the sheets of the first set of support members comprises carbon fiber.

In one embodiment of the first aspect, the sheets of the first set of support members comprises cellulose.

The advantage of the first aspect is at least that the ability to conform to a desired exterior geometry is improved. A further advantage is that structural integrity is improved.

The scope of the invention is defined by the claims, which are incorporated into this section by reference. Reference will be made to the appended sheets of drawings that will first be described briefly

### BRIEF DESCRIPTION OF THE DRAWINGS

**Fig. 1** illustrates a tank comprising a chamber according to one or more embodiments of the present disclosure.
**Fig. 2** illustrates a tank comprising the chamber and an endoskeleton according to one or more embodiments of the present disclosure.
**Fig. 3** illustrates an example on how one or more sheets of a first set of support members are attached to the chamber along sides of one or more sheets facing the chamber.
**Fig 4A** illustrates the solution of the present disclosure compared to conventional solutions.
**Fig. 4B** illustrates local stress in walls of the chamber for the present disclosure and for conventional solutions.
**Fig 5A** shows an endoskeleton where the tank only comprises a first set of support members
**Fig 5B** shows an endoskeleton where the tank comprises the first set of support members and a second set of support members.
**Fig. 6** illustrates how the tank conforms to a desired exterior geometry.
**Fig. 7A-B** illustrates a tank further comprising a jacket.
**Fig. 8** illustrates a tank comprising an insulation layer.
**Fig. 9** illustrates a tank wherein the endoskeleton is coupled to the chamber by attaching one or more sheets of the first set of support members to the chamber according to one or more embodiments of the present disclosure.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

The present disclosure is at least partially related to US10731344B2, which teachings are hereby incorporated herein by reference in its entirety.

The present disclosure relates to tanks, in particular tanks that are conformable and may fit in, desired exterior geometry, typically an available void in a mechanical construction. The tanks are intended for holding pressurized substances or substances held under lower/higher pressure than the surrounding atmosphere.

Challenges for such tanks include providing sufficient structural strength whilst regarding weight restrictions.

The present disclosure addresses these challenges by providing a chamber configured to enclose the pressurized substance and provide a seal between the pressurized substance and a surrounding atmosphere. Further the tank comprises an endoskeleton arranged within the chamber and being coupled to the chamber to provide structural support to the chamber.

The endoskeleton comprises a plurality of mutually coupled support members. The coupling of the support members allows the endoskeleton to transfer forces amongst the plurality of coupled support members.

This is differing the disclosure from conventional solutions, which typically only reinforce walls of a tank. In other words, conventional solutions focus mainly on avoiding deformation of the walls of the tank. The present disclosure "fills" and/or "spans" a desired exterior geometry with support elements and couples the support members to each other and to the chamber to increase structural integrity of the tank. In other words, the tank forms a supporting unit in itself, having a relatively high structural integrity.

Further, the plurality of coupled support members comprises at least a first set of support members having sides that are formed by sheets. The sheets may further be provided with openings to adapt their load distribution compared to conventional solutions.

Physical loads - forces, pressures, accelerations - distribute in physical structures as material strain, which in turn expresses as material stress which is a handy quantifying metric. While it is usually desirable to get as smooth stress fields as possible for maximum material utilization, it is only part of the equation. The strain is often a more proper metric to use and manipulate it in a beneficial direction means adjusting how loads distribute by changing the geometry of components or members.

Each support member of the support members in the first set comprises interior asymmetric tetrahedral structures formed by its sides. In embodiments, each side, formed by sheets, of the asymmetric tetrahedral structures is in the shape of a non-equilateral triangle. This allows for generating strong support members with adaptable exterior shape and exterior size.

In the present disclosure, the term "tank" denotes a receptacle or container configured to hold a substance in a solid, liquid, or gaseous state.

In the present disclosure, the term "pressurized substance" denotes substances held under lower/higher pressure than the surrounding atmosphere. The substances may be in a solid, liquid, or gaseous state.

In the present disclosure, the term "chamber" denotes a gas and/or fluid tight membrane that encloses the pressurized substance and provides a seal between the pressurized substance and a surrounding atmosphere.

In the present disclosure, the term "endoskeleton" denotes a support structure arranged inside the chamber of the tank in a similar manner to how an endoskeleton is arranged inside a body of a creature.

In the present disclosure, the term "support member" denotes a mechanical element configured to transfer forces between at least two points.

In the present disclosure, the term "sheet" denotes a broad flat piece of material or a broad stretch or surface of something. An example of a sheet is a metal strip or band made from sheet metal. The metal strip or band may further be manufactured by additive manufacturing or 3D printing.

In the present disclosure, the term "exterior size" denotes a volume formed by the outline of the support member/s.

In the present disclosure, the term "jacket" denotes a first layer enclosing the exterior of the chamber.

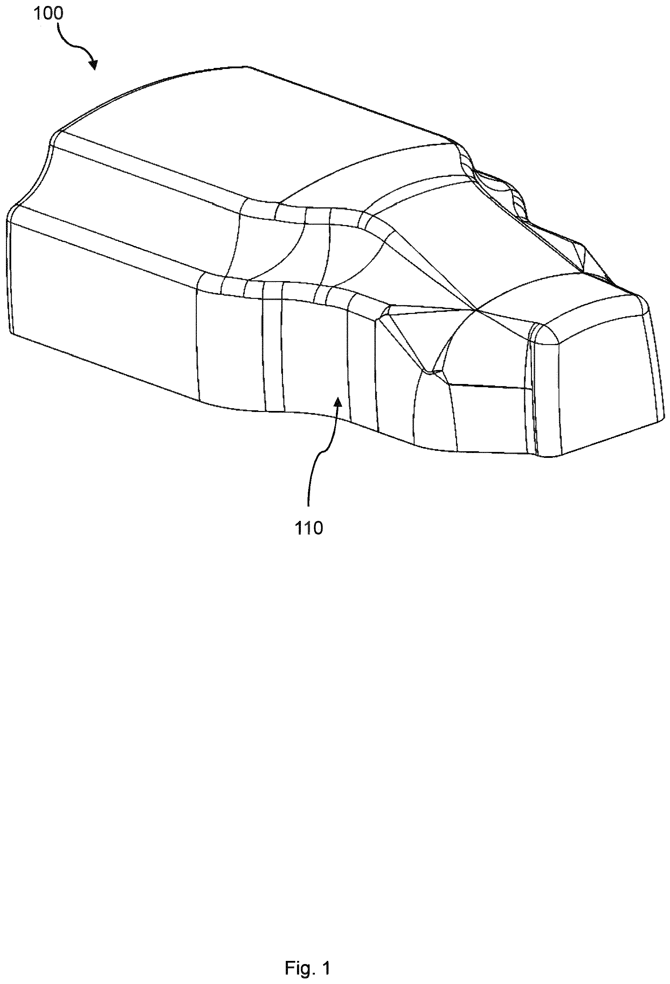

**Fig. 1** illustrates a tank 100 comprising a chamber 110 according to one or more embodiments of the present disclosure. The tank 100 is configured to hold a pressurized substance in any of a solid, liquid, or gaseous state. In one non-limiting example, the substance is hydrogen. The tank 100 comprises a chamber 110. The chamber is configured to enclose the pressurized substance and provide a seal between the pressurized substance and a surrounding atmosphere.

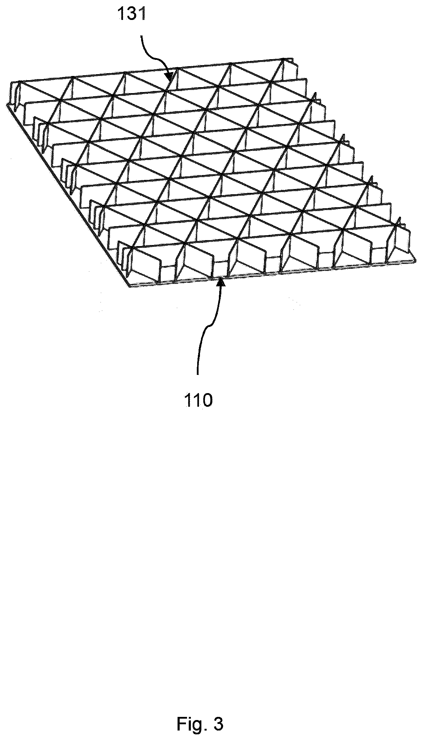

The chamber 110 of the tank 100 is configured with a shape that is conformable, e.g., conformable to a desired exterior geometry intended to surround the chamber 110. This is further described in relation to Fig. 3.

This is advantageous in the field of mechanical construction, as voids in the mechanical construction can be fully utilized to hold or store pressurized substance by using a conformable tank. Typically, such a void in a mechanical construction exists in a wing of an aircraft or in the chassis of a road vehicle. However, any other mechanical construction may benefit from using a conformable tank.

In conventional solutions, cylindric, spheric or box-shaped structures are frequently used. A drawback with such solutions is that said void in said mechanical construction is not well utilized or the structural integrity of such solutions is not very high.

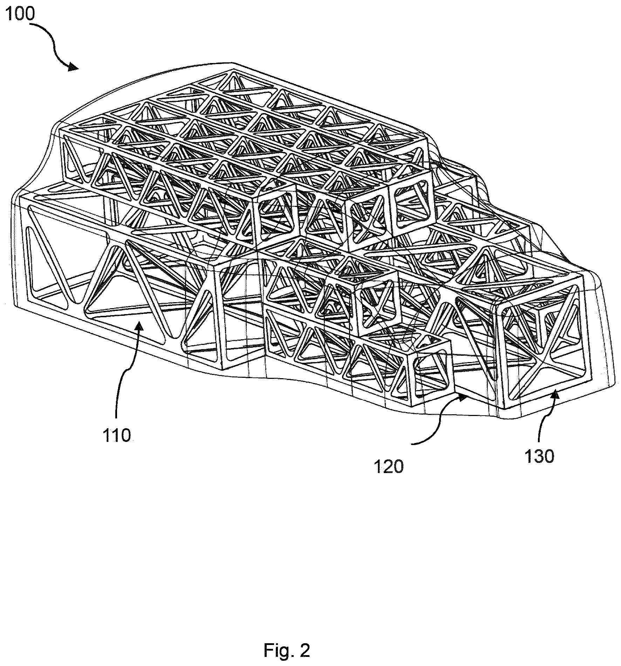

**Fig. 2** illustrates a tank 100 comprising the chamber 110 and an endoskeleton 120 according to one or more embodiments of the present disclosure.

The endoskeleton 120 is arranged within the chamber 110 and is mechanically coupled to the chamber 110 to provide structural support to the chamber 110. By coupling the endoskeleton 120 to the chamber 110, the structural integrity of the tank is improved, and the stress of the chamber walls are reduced.

The endoskeleton 120 is coupled to the chamber 110 by using a suitable method, such as welding and/or gluing and/or brazing and/or fusing and/or additive manufacturing and/or additive depositioning.

The endoskeleton 120 comprises a plurality of mechanically coupled support members 130. The support members 130 "fills" and/or "spans" the interior of the chamber 110. The support members are mechanically coupled to each other and to the chamber 110 to increase structural integrity of the tank. Coupling the support members 130 to each other improves structural integrity of the tank and the stress of the chamber walls are further reduced as the coupling of support elements to each other and to the chamber 110 allows forces to be transferred between support elements away from the chamber walls. In particular, adjacent support elements transfer forces between them.

The plurality of coupled support members 130 comprises at least a first set 131 of support members having sides that are formed by sheets, wherein each support member of the support members in the first set 131 comprises interior asymmetric tetrahedral structures formed by its sides, wherein each side of the asymmetric tetrahedral structures is in the shape of a non-equilateral triangle.

This has the advantage of creating relatively stronger support elements that can conform to any number of desired geometries compared to using symmetric tetrahedral structures using sides in the shape of equilateral triangles.

For some tank geometries, the dimensions of the tank 100 is an integer factor of the exterior size of the support elements, and the support elements will completely fill or span the interior volume of the tank 100.

In one embodiment, each of the plurality of coupled support members 130 has an equal exterior size.

For other tank geometries, the dimensions of the tank 100 is not an integer factor of the exterior size of the support elements, and the support elements will need to have varying exterior sizes to completely or nearly completely/substantially fill or span the interior volume of the tank 100.

In one alternative embodiment, at least some of the plurality of coupled support members 130 have varying exterior size.

Additionally, or alternatively, the endoskeleton 120 is coupled to the chamber 110 by attaching one or more sheets of the first set 131 of support members to the chamber 110. In one embodiment, at least some of the one or more sheets of the first set 131 are attached to the chamber 110 along sides of one or more sheets facing the chamber 110. In one example, the entire side of one or more sheets facing the chamber 110 are welded to the chamber 110. In a further example, the entire side of one or more sheets facing the chamber 110 are each folded to form a rectangular area, and the rectangular area is glued to the chamber 110.

This has the advantage of reducing the stress in the walls of the chamber 110. This is achieved by effectively splitting the outer surface into smaller sub-surfaces, each sub-surface experiencing a limited portion of the total load. A further advantage is that the endoskeleton offloads the walls of the chamber 110 and absorbs the load into the support members that transfer forces into its structure. In other words, the endoskeleton buttresses the wall. Instead of the wall transmitting the entire load via tangential stress, portions of the load are conveyed inwards through the endoskeleton, which lowers the local stress in the wall.

The one or more sheets may in embodiments be coupled/attached to the chamber 110 by welding and/or gluing and/or brazing and/or fusing and/or additive manufacturing and/or additive depositioning.

In Fig. 2 the support members are shown with similar orientation, however it is understood that any suitable orientation may be used without departing from the present disclosure.

**Fig. 3** illustrates an example on how one or more sheets of the first set 131 of support members are attached to the chamber 110 along sides of one or more sheets facing the chamber 110.

In this example, the entire side of one or more sheets facing the chamber 110 are welded to the chamber 110. In a further example (not shown), the entire side of one or more sheets facing the chamber 110 are each folded to form a tab or rectangular area, and the rectangular area is then attached, e.g., welded or glued to, the walls of the chamber 110.

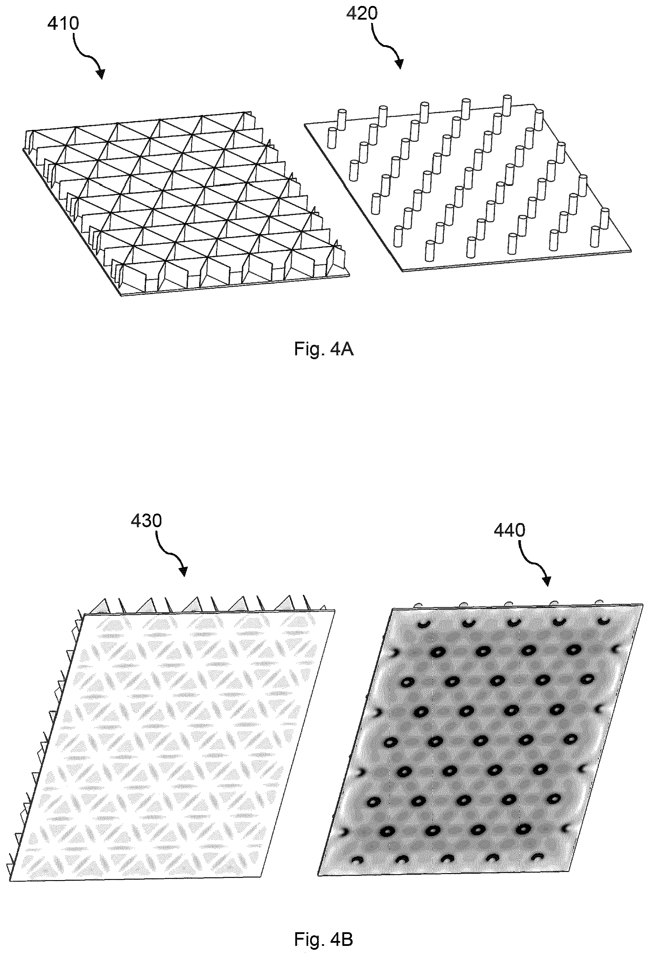

**Fig 4A** illustrates the solution of the present disclosure 410 compared to conventional solutions 420. As can be seen in Fig. 4A, support elements of the present disclosure are attached along the entire sides of one or more sheets facing the chamber 110.

In conventional solutions 420, support elements in the form of beams or trusses are attached at points to the chamber 110, typically at the end of beams or trusses. This has the disadvantage that the local stress at the point where beams or trusses attach to the walls of the chamber 110 is relatively high.

**Fig. 4B** illustrates local stress in walls of the chamber for the present disclosure 430 and for conventional solutions 440. Fig. 4B illustrates images 430, 440 indicating high local stress as darker areas and lower local stress as lighter areas. As can be seen in Fig. 4B, the local stress in walls of the chamber is lowered in the present solution compared to conventional solutions. High local stress in the walls of the chamber is shown as dots in the right-hand image 440.

Additionally, or alternatively, at least the sheets of the first set 131 of support members are provided with openings. By shaping the openings in different forms, the characteristics of structural integrity of the support elements can be adapted to desired requirements.

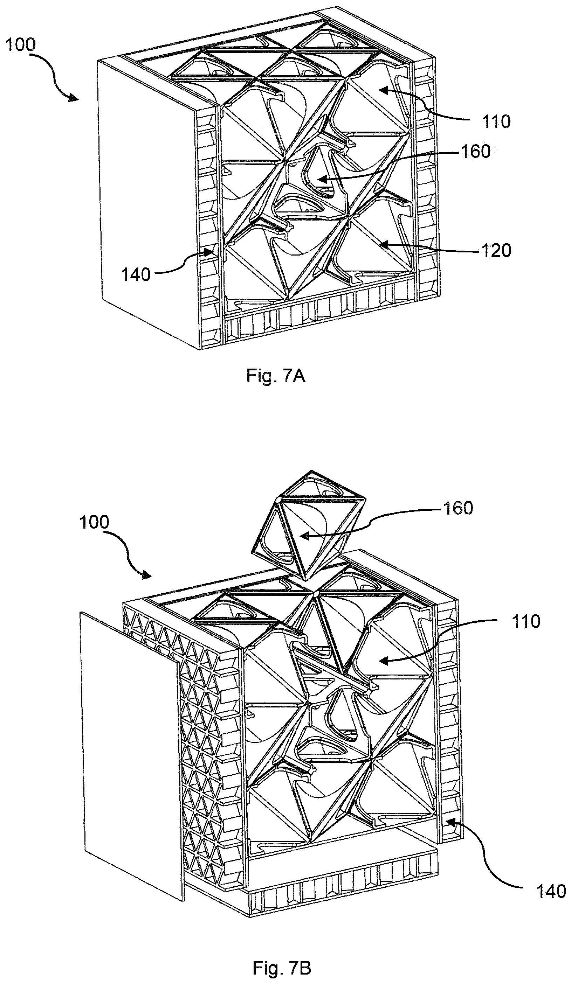

Examples of openings are seen in Fig. 7A-B. The shape of the openings may be determined based on a stress/strain analysis indicating a level being below a threshold.

The sheets of the first set 131 of support members can comprise different suitable materials.

Additionally, or alternatively, the sheets of the first set 131 of support members comprises metal. In one embodiment, the metal is stainless steel.

Additionally, or alternatively, the sheets of the first set 131 of support members comprises plastic.

Additionally, or alternatively, the sheets of the first set 131 of support members comprises carbon fiber.

Additionally, or alternatively, the sheets of the first set 131 of support members comprises cellulose.

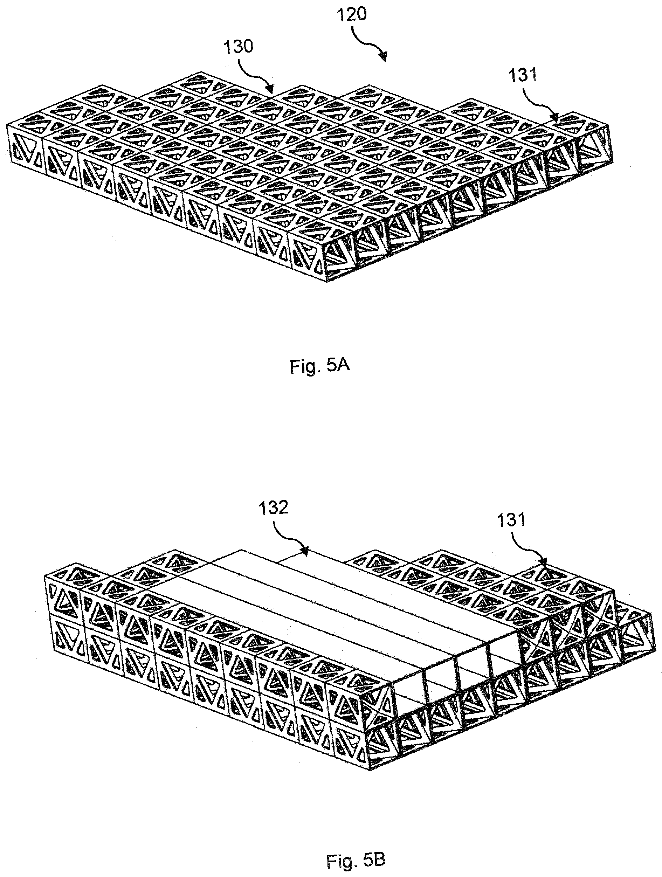

**Fig 5A** shows an endoskeleton 120 where the plurality of coupled support members 130 only comprises the first set 131 of support members. For readability of the figure, the chamber 110 is not shown in Fig. 5A.

**Fig 5B** shows an endoskeleton 120 where the plurality of coupled support members 130 comprises the first set 131 of support members and a second set of support members 132. Each of the support members in the second set 132 comprises interior polyhedral structures other than the asymmetric tetrahedral structures. In the example shown in Fig, 5B, square shaped tubular support elements are shown. This is typically desirable in application when loads or strain decrease towards the center of a tank.

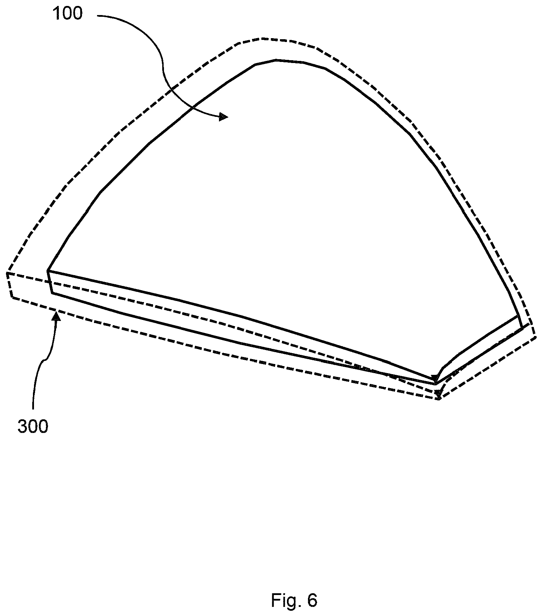

**Fig. 6** illustrates how the tank 100 conforms to a desired exterior geometry 300, e.g., a void in a mechanical construction as previously described. The present disclosure performs particularly well when the exterior geometry 300 is irregular and non-symmetrical, e.g., a void in a wing of an aircraft.

**Fig. 7A** illustrates a tank 100 further comprising a jacket 140 according to one or more embodiments of the present disclosure. The jacket 140 is arranged to form a layer enclosing the exterior of the chamber 110.

In one embodiment, the jacket 140 forms an exoskeleton configured to provide structural support to the chamber 110. The jacket may further be attached to the chamber of the tank using a suitable method, such as welding and/or gluing and/or brazing and/or fusing and/or additive manufacturing and/or depositioning. This is illustrated in the example shown in Fig. 7A-B.

Additionally, or alternatively, the jacket 140 is configured to provide thermal insulation and effectively forms an insulation layer.

In some embodiments, a separate insulation layer is added to further shield the tank from the surrounding atmosphere.

Fig. 7A further illustrates openings 160 in the sheets of the first set 131 of support members.

**Fig. 7B** illustrates an exploded view of the tank 100 according to one or more embodiments of the present disclosure.

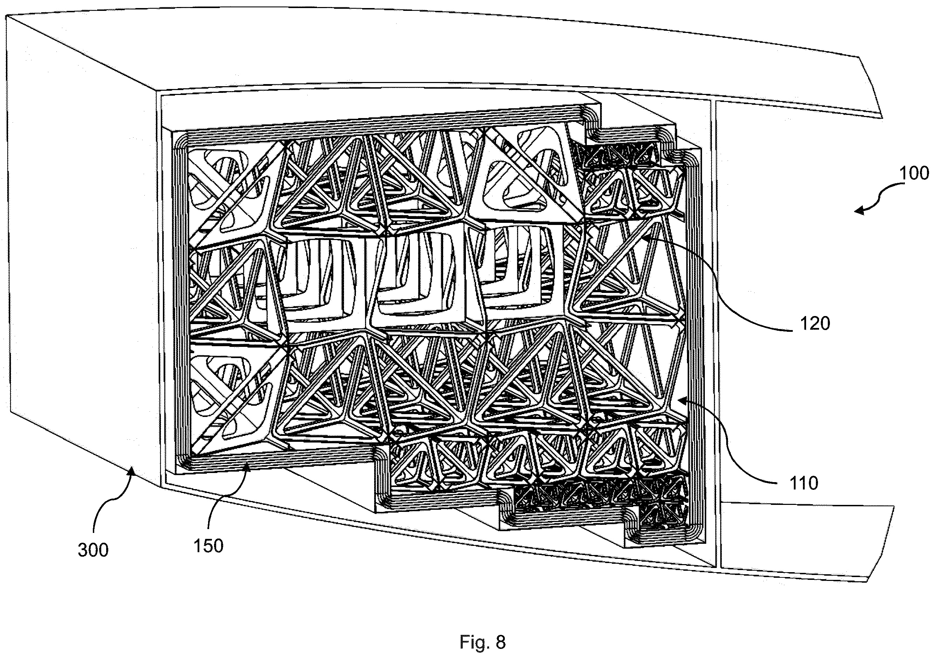

**Fig. 8** illustrates a tank 100 comprising an insulation layer 150. In Fig. 8, the exterior geometry 300 is irregular and non-symmetrical, e.g., a void in a wing of an aircraft. The tank 100 comprises a chamber 110 and an internal endoskeleton 120. The chamber 110 is further provided with an insulation layer 150.

In one embodiment, the tank further comprises an insulation layer 150. The insulation layer 150 is arranged to form a layer enclosing the exterior of the chamber 110.

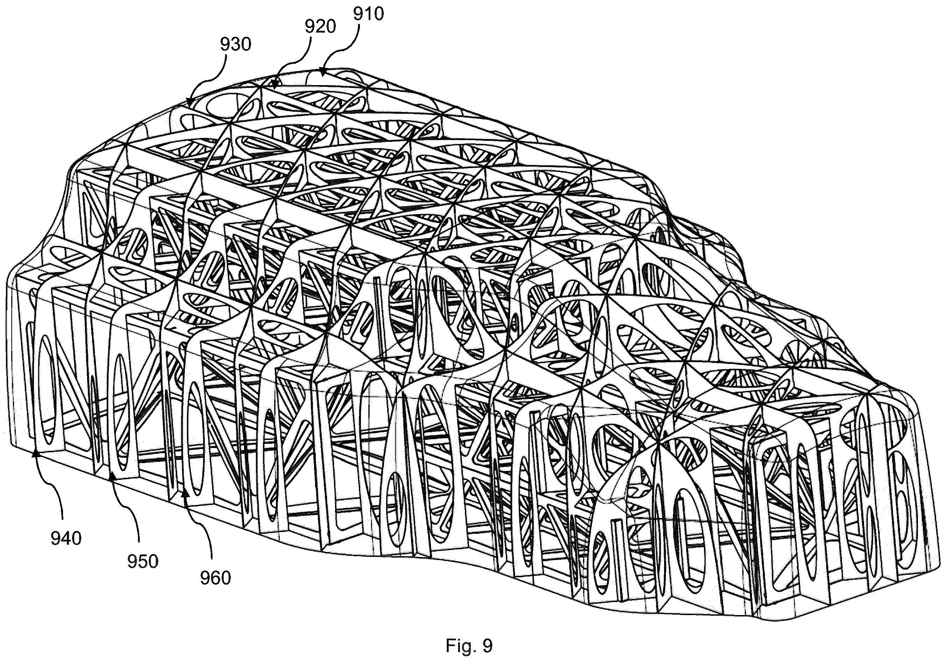

**Fig. 9** illustrates a tank wherein the endoskeleton 120 is coupled to the chamber 110 by attaching one or more sheets of the first set 131 of support members to the chamber according to one or more embodiments of the present disclosure. The one or more sheets of the first set 131 are attached to the chamber 110 along sides 910-960 of one or more sheets facing the chamber 110.

In other words, sides (910-960) of sheets of the first set 131 of support members that are facing the chamber 110 and/or the walls of the chamber 110 are attached to the chamber 110 and/or to the walls of the chamber 110 along sides 910-960 of one or more sheets facing the chamber 110.

This has the advantage to improve structural integrity of the tank 100 also when dimensions of the chamber 110 is not mapping to an integer multiple of dimensions the support members. In other words, further improving the ability to conform to an exterior geometry 300 that is irregular and non-symmetrical, e.g., a void in a wing of an aircraft.

In one embodiment, one or more of the sides (910-960) of sheets of the first set 131 of support members are integral parts of the support members. In other words, the sides/sheets of the first set 131 of support members are typically conformed to and attached to the chamber walls.

In one embodiment, one or more of the sides (910-960) of sheets of the first set 131 of support members are parts added to and attached to the support members. In other words, additional parts are added to the sides/sheets of the first set 131 of support members and the added parts are attached to inside and/or the outside of chamber walls, e.g., as parts of the jacket 140 as shown in Fig. 7A and Fig. 7B.

Fig. 9 illustrates an example where additional parts are added to the sides/sheets of the first set 131 of support members and the added parts are attached to the inside of the chamber 110 and/or chamber walls.

It is understood that even if not explicitly shown in the Figures, the tank may be provided with additional features such as inlet/outlet connectors, sensors or other auxiliary equipment.

Finally, it should be understood that the invention is not limited to the embodiments described above, but also relates to and incorporates all embodiments within the scope of the appended independent claims.

## Claims

1. A tank (100) configured to hold a pressurized substance, the tank comprising:
a chamber (110), the chamber configured to enclose the pressurized substance and provide a seal between the pressurized substance and a surrounding atmosphere,
an endoskeleton (120) arranged within the chamber (110) and being coupled to the chamber (110) to provide structural support to the chamber (110),
wherein the endoskeleton (120) comprises a plurality of coupled support members (130), wherein the plurality of coupled support members (130) comprises at least a first set (131) of support members having sides that are formed by sheets, wherein each support member of the support members in the first set (131) comprises interior asymmetric tetrahedral structures formed by the sides, wherein each side of the asymmetric tetrahedral structures is in the shape of a non-equilateral triangle.

2. The tank according to claim 1, wherein the chamber (110) is configured with a shape that is conformable to a desired exterior geometry (300) intended to surround the chamber (110).

3. The tank according to any of claims 1 or 2 wherein the endoskeleton (120) further comprises a second set of support members (132), wherein each of the support members in the second set (132) comprises interior polyhedral structures other than the asymmetric tetrahedral structures.

4. The tank according to any of claims 1-3, wherein each of the plurality of coupled support members (130) has an equal exterior size.

5. The tank according to any of claims 1-3, wherein at least some of the plurality of coupled support members (130) have varying exterior size.

6. The tank according to any of the preceding claims, wherein the endoskeleton (120) is coupled to the chamber (110) by attaching one or more sheets of the first set (131) of support members to the chamber (110).

7. The tank according to claim 6, wherein the one or more sheets of the first set (131) are attached to the chamber (110) along sides (910-960) of one or more sheets facing the chamber (110).

8. The tank according to claim 7, wherein the one or more sheets are attached to the chamber (110) by welding and/or gluing and/or brazing and/or fusing and/or additive manufacturing and/or depositioning.

9. The tank according to any of the preceding claims, further comprising a jacket (140), the jacket (140) being arranged to form a layer enclosing the exterior of the chamber (110).

10. The tank according to claim 9, wherein the jacket (140) forms an exoskeleton configured to provide structural support to the chamber (110).

11. The tank according to any of the preceding claims, further comprising an insulation layer (150), the insulation layer (150) being arranged to form a layer enclosing the exterior of the chamber (110).

12. The tank according to any of the preceding claims, wherein at least the sheets of the first set (131) of support members are provided with openings.

13. The tank according to any of the preceding claims, wherein the sheets of the first set (131) of support members comprises metal.

14. The tank according to claim 13, wherein the metal is stainless steel.

15. The tank according to any of the preceding claims, wherein the sheets of the first set (131) of support members comprises plastic.

16. The tank according to any of the preceding claims, wherein the sheets of the first set (131) of support members comprises carbon fiber.

17. The tank according to any of the preceding claims, wherein the sheets of the first set (131) of support members comprises cellulose.

## Patentansprüche

1. Tank (100), der konfiguriert ist, um eine unter Druck stehende Substanz aufzunehmen, wobei der Tank aufweist:
eine Kammer (110), wobei die Kammer konfiguriert ist, um die unter Druck stehende Substanz zu umschließen und eine Dichtung zwischen der unter Druck stehenden Substanz und einer umgebenden Atmosphäre bereitzustellen,
ein Endoskelett (120), das innerhalb der Kammer (110) angeordnet ist und mit der Kammer (110) gekoppelt ist, um der Kammer (110) strukturellen Halt zu verleihen,
wobei das Endoskelett (120) mehrere gekoppelte Halteelemente (130) aufweist, wobei die mehreren gekoppelten Halteelemente (130) wenigstens einen ersten Satz (131) von Halteelementen mit Seiten, die von Lagen ausgebildet werden, aufweisen, wobei jedes Halteelement der Halteelemente in dem ersten Satz (131) von den Seiten ausgebildete innere asymmetrische tetraedrische Strukturen aufweist, wobei jede Seite der asymmetrischen tetraedrischen Strukturen die Form eines nicht gleichseitigen Dreiecks hat.

2. Tank nach Anspruch 1, wobei die Kammer (110) mit einer Form konfiguriert ist, die an eine gewünschte Außengeometrie (300), welche dazu gedacht ist, die Kammer (110) zu umgeben, anpassbar ist.

3. Tank nach einem der Ansprüche 1 oder 2, wobei das Endoskelett (120) ferner einen zweiten Satz von Halteelementen (132) aufweist, wobei jedes der Halteelemente in dem zweiten Satz (132) innere polyedrische Strukturen außer der asymmetrischen tetraedrischen Strukturen aufweist.

4. Tank nach einem der Ansprüche 1 - 3, wobei jedes der mehreren gekoppelten Halteelemente (130) eine gleiche Außengröße hat.

5. Tank nach einem der Ansprüche 1 - 3, wobei wenigstens einige der mehreren gekoppelten Halteelemente (130) unterschiedliche Außengrößen haben.

6. Tank nach einem der vorhergehenden Ansprüche, wobei das Endoskelett (120) mit der Kammer (110) gekoppelt wird, indem eine oder mehrere Lagen des ersten Satzes (131) der Halteelemente an der Kammer (110) befestigt werden.

7. Tank nach Anspruch 6, wobei die eine oder mehreren Lagen des ersten Satzes (131) entlang Seiten (910 - 960) einer oder mehrerer Lagen, die der Kammer (110) zugewandt sind, an der Kammer (110) befestigt sind.

8. Tank nach Anspruch 7, wobei die eine oder mehreren Lagen durch Schweißen und/oder Leimen und/oder Hartlöten und/oder Verschmelzen und/oder zusätzliche Fertigung und/oder Abscheidung an der Kammer (110) befestigt werden.

9. Tank nach einem der vorhergehenden Ansprüche, der ferner einen Mantel (140) aufweist, wobei der Mantel (140) eingerichtet ist, um eine Schicht zu bilden, welche das Äußere der Kammer (110) umschließt.

10. Tank nach Anspruch 9, wobei der Mantel (140) ein Exoskelett bildet, das konfiguriert ist, um der Kammer (110) strukturellen Halt zu verleihen.

11. Tank nach einem der vorhergehenden Ansprüche, der ferner eine Isolationsschicht (150) aufweist, wobei die Isolationsschicht (150) eingerichtet ist, um eine Schicht zu bilden, welche das Äußere der Kammer (110) umschließt.

12. Tank nach einem der vorhergehenden Ansprüche, wobei wenigstens die Lagen des ersten Satzes (131) von Halteelementen mit Öffnungen versehen sind.

13. Tank nach einem der vorhergehenden Ansprüche, wobei die Lagen des ersten Satzes (131) von Halteelementen Metall aufweisen.

14. Tank nach Anspruch 13, wobei das Metall nichtrostender Stahl ist.

15. Tank nach einem der vorhergehenden Ansprüche, wobei die Lagen des ersten Satzes (131) von Halteelementen Kunststoff aufweisen.

16. Tank nach einem der vorhergehenden Ansprüche, wobei die Lagen des ersten Satzes (131) von Halteelementen Kohlenstofffaser aufweisen.

17. Tank nach einem der vorhergehenden Ansprüche, wobei die Lagen des ersten Satzes (131) von Halteelementen Zellulose aufweisen.

## Revendications

1. Réservoir (100) configuré pour contenir une substance sous pression, le réservoir comprenant :
une chambre (110), la chambre étant configurée pour enfermer la substance sous pression et fournir une étanchéité entre la substance sous pression et une atmosphère environnante,
un endosquelette (120) disposé à l'intérieur de la chambre (110) et étant couplé à la chambre (110) pour fournir un support structurel à la chambre (110),
dans lequel l'endosquelette (120) comprend une pluralité d'éléments de support couplés (130), dans lequel la pluralité d'éléments de support couplés (130) comprend au moins un premier ensemble (131) d'éléments de support ayant des côtés qui sont formés par des feuilles, dans lequel chaque élément de support des éléments de support dans le premier ensemble (131) comprend des structures tétraédriques asymétriques intérieures formées par les côtés, dans lequel chaque côté des structures tétraédriques asymétriques est en forme de triangle non équilatéral.

2. Réservoir selon la revendication 1, dans lequel la chambre (110) est configurée avec une forme qui est conforme à une géométrie extérieure souhaitée (300) destinée à entourer la chambre (110).

3. Réservoir selon l'une quelconque des revendications 1 ou 2, dans lequel l'endosquelette (120) comprend en outre un deuxième ensemble d'éléments de support (132), dans lequel chacun des éléments de support du deuxième ensemble (132) comprend des structures polyédriques intérieures autres que les structures tétraédriques asymétriques.

4. Réservoir selon l'une quelconque des revendications 1 à 3, dans lequel chacun de la pluralité d'éléments de support couplés (130) a une dimension extérieure égale.

5. Réservoir selon l'une quelconque des revendications 1 à 3, dans lequel au moins certains de la pluralité d'éléments de support couplés (130) ont une dimension extérieure variable.

6. Réservoir selon l'une quelconque des revendications précédentes, dans lequel l'endosquelette (120) est couplé à la chambre (110) en fixant une ou plusieurs feuilles du premier ensemble (131) d'éléments de support à la chambre (110).

7. Réservoir selon la revendication 6, dans lequel les une ou plusieurs feuilles du premier ensemble (131) sont fixées à la chambre (110) le long des côtés (910-960) d'une ou de plusieurs feuilles faisant face à la chambre (110).

8. Réservoir selon la revendication 7, dans lequel les une ou plusieurs feuilles sont fixées à la chambre (110) par soudage et/ou collage et/ou brasage et/ou fusion et/ou fabrication additive et/ou dépôt.

9. Réservoir selon l'une quelconque des revendications précédentes, comprenant en outre une chemise (140), la chemise (140) étant agencée pour former une couche entourant l'extérieur de la chambre (110).

10. Réservoir selon la revendication 9, dans lequel la chemise (140) forme un exosquelette configuré pour fournir un support structurel à la chambre (110).

11. Réservoir selon l'une quelconque des revendications précédentes, comprenant en outre une couche isolante (150), la couche isolante (150) étant agencée pour former une couche entourant l'extérieur de la chambre (110).

12. Réservoir selon l'une quelconque des revendications précédentes, dans lequel au moins les feuilles du premier ensemble (131) d'éléments de support sont munies d'ouvertures.

13. Réservoir selon l'une quelconque des revendications précédentes, dans lequel les feuilles du premier ensemble (131) d'éléments de support comprennent du métal.

14. Réservoir selon la revendication 13, dans lequel le métal est de l'acier inoxydable.

15. Réservoir selon l'une quelconque des revendications précédentes, dans lequel les feuilles du premier ensemble (131) d'éléments de support comprennent du plastique.

16. Réservoir selon l'une quelconque des revendications précédentes, dans lequel les feuilles du premier ensemble (131) d'éléments de support comprennent de la fibre de carbone.

17. Réservoir selon l'une quelconque des revendications précédentes, dans lequel les feuilles du premier ensemble (131) d'éléments de support comprennent de la cellulose.
